# FASCICULE DE BREVET EUROPEEN

(11) **EP 2 429 792 B1**
(45) Date de publication et mention de la délivrance du brevet: **30.09.2015**
(21) Numéro de dépôt: 10718203.2
(22) Date de dépôt: 11.05.2010
(51) Int. Cl.: B29C 45/00, B29C 45/16

(54) **KIT POUR UNE MACHINE DE MOULAGE PAR INJECTION DE PIECES MOULEES**
KIT FÜR EINE MASCHINE ZUM SPRITZGIESSEN VON FORMTEILEN
KIT FOR A MACHINE FOR INJECTION-MOULDING MOULDED PARTS

(30) Priorité: 11.05.2009 FR 0953082
(43) Date de publication de la demande: 21.03.2012
(73) Titulaire: Moulindustrie, 14350 Sainte Marie Laumont (FR)
(72) Inventeur: MOULIN, Jacky, F-14350 Sainte Marie Laumont (FR)
(74) Mandataire: Maillet, Alain
(86) Numéro de dépôt international: PCT/EP2010/056427
(87) Numéro de publication internationale: WO 2010/130719

(56) Documents cités:
- DE-U1-202004 020 287
- FR-A1- 2 841 174
- JP-A- 10 175 230
- WURST S: "ENTNEHMEN BEI GESCHLOSSENEM WERKZEUG" PLASTVERARBEITER, HUETHIG GMBH, HEIDELBERG, DE, vol. 54, no. 6, 1 juin 2003 (2003-06-01), page 26/27, XP001153848 ISSN: 0032-1338

## Description

La présente invention concerne un kit pour une machine de moulage par injection comportant au moins un barillet, ainsi qu'une machine de moulage par injection comportant un tel kit.

Le document JP-A-10175203 divulgue un kit pour une machine de moulage par injection de pièces moulées, la machine de moulage comportant un premier plateau et un deuxième plateau, le kit comportant: - une première plaque support destinée à être fixée sur ledit premier plateau, - une deuxième plaque support destinée à être fixée sur ledit deuxième plateau, les deux plateaux étant prévus pour être mobiles l'un par rapport à l'autre en coulissement selon une direction de translation de manière à prendre successivement une position ouverte dans laquelle les deux plaques support sont distantes l'une de l'autre et une position fermée dans laquelle les deux plaques support sont accolées l'une à l'autre, - pour la première plaque support, au moins un barillet d'un premier type, monté mobile en rotation sur ladite première plaque support autour d'un axe perpendiculaire au plan de ladite première plaque support, et portant au moins deux empreintes, - pour la deuxième plaque support, au moins un barillet d'un deuxième type, monté mobile en rotation sur ladite deuxième plaque support autour d'un axe perpendiculaire au plan de ladite deuxième plaque support, et portant au moins deux empreintes, - pour chacune desdites empreintes, une contre-empreinte disposée sur l'autre plaque support, - des moyens d'entraînement destinés à déplacer en rotation chaque barillet pour permettre le positionnement successif de chaque empreinte en vis-à-vis d'au moins deux contre-empreintes différentes et de manière à ce que, à chaque déplacement en rotation de chaque barillet, l'une des empreintes dudit barillet du premier type soit en vis-à-vis de l'une des contre-empreintes dudit barillet du deuxième type et de manière à ce que, à chaque déplacement en rotation de chaque barillet, l'autre empreinte dudit barillet du premier type et la contre-empreinte associée de ladite deuxième plaque support constituent un couple de moulage d'un premier élément de la pièce à mouler.

Pour mouler une multitude de pièces, par exemple du type bouchon de récipient, une machine de moulage par injection de l'état de la technique comporte une première plaque dont l'une des faces porte une pluralité de premières formes de moulage et une deuxième plaque dont l'une des faces porte une pluralité de deuxièmes formes de moulage. Chaque première forme de moulage est associée à une deuxième forme de moulage pour former un volume dans lequel du matériau est injecté afin de réaliser la pièce à mouler.

Les deux plaques sont mobiles l'une par rapport à l'autre en coulissement entre une position fermée et une position ouverte selon une direction de translation sensiblement orthogonale au plan des deux faces.

Dans la position fermée, les deux faces sont en contact l'une contre l'autre de manière à ce que les premières formes de moulage et les deuxièmes formes de moulage correspondantes soient en vis-à-vis. Chacun des volumes est alors rempli par le matériau de moulage souhaité.

Dans la position ouverte, les deux plaques sont distantes l'une de l'autre pour permettre l'éjection des pièces moulées.

Dans le cas de l'état de la technique, lorsqu'un surmoulage de la pièce moulée est nécessaire, chaque pièce doit être mise en place dans un autre appareil où elle est surmoulée.

Lorsqu'un premier élément moulé doit être assemblé à un deuxième élément moulé afin de réaliser la pièce finale à mouler, une autre machine doit être mise en place pour récupérer les premiers et les deuxièmes éléments et les assembler.

Que ce soit dans le cas du surmoulage ou dans le cas de l'assemblage, il est nécessaire de prévoir une autre machine pour parvenir à la pièce finale. De telles machines sont coûteuses aussi bien à l'achat qu'à l'entretien.

Il est donc souhaitable de trouver une machine de moulage par injection qui permet de réaliser ces différentes opérations et qui a un coût de revient réduit.

Un objet de la présente invention est de proposer un kit pour une machine de moulage par injection qui ne présente pas les inconvénients de l'art antérieur et qui en particulier permet de réaliser des pièces surmoulées et/ou assemblées de manière simple et peu onéreuse.

A cet effet, est proposé un kit pour une machine de moulage par injection de pièces moulées, la machine de moulage comportant un premier plateau et un deuxième plateau, le kit comportant:
- une première plaque support destinée à être fixée sur ledit premier plateau,
- une deuxième plaque support destinée à être fixée sur ledit deuxième plateau, les deux plateaux étant prévus pour être mobiles l'un par rapport à l'autre en coulissement selon une direction de translation de manière à prendre successivement une position ouverte dans laquelle les deux plaques support sont distantes l'une de l'autre et une position fermée dans laquelle les deux plaques support sont accolées l'une à l'autre,
- pour la première plaque support, au moins un barillet d'un premier type, monté mobile en rotation sur ladite première plaque support autour d'un axe perpendiculaire au plan de ladite première plaque support, et portant au moins deux empreintes,
- pour la deuxième plaque support, au moins un barillet d'un deuxième type, monté mobile en rotation sur ladite deuxième plaque support autour d'un axe perpendiculaire au plan de ladite deuxième plaque support, et portant au moins trois empreintes,
- pour chacune desdites empreintes, une contre-empreinte disposée sur l'autre plaque support,
- des moyens d'entraînement destinés à déplacer en rotation chaque barillet pour permettre le positionnement successif de chaque empreinte en vis-à-vis d'au moins deux contre-empreintes différentes et de manière à ce que, à chaque déplacement en rotation de chaque barillet, l'une des empreintes dudit barillet du premier type soit en vis-à-vis de l'une des contre-empreintes dudit barillet du deuxième type et de manière à ce que, à chaque déplacement en rotation de chaque barillet, l'autre empreinte dudit barillet du premier type et la contre-empreinte associée de ladite deuxième plaque support constituent un couple de moulage d'un premier élément de la pièce à mouler, l'une des autres empreintes dudit barillet du deuxième type et la contre-empreinte associée de ladite première plaque support constituent un couple de moulage d'un deuxième élément de la pièce à mouler, l'une des autres empreintes dudit barillet du deuxième type et la contre-empreinte associée de ladite première plaque support constituent un couple de surmoulage dudit deuxième élément, et ledit couple empreinte dudit barillet du premier type et contre-empreinte dudit barillet du deuxième type constituent un couple d'assemblage dudit premier élément ainsi moulé et dudit deuxième élément ainsi moulé et surmoulé.

L'invention propose également une machine de moulage par injection de pièces moulées comportant:
- un premier plateau,
- un deuxième plateau, les deux plateaux étant prévus pour être mobiles l'un par rapport à l'autre en coulissement selon une direction de translation, et
- un kit selon la variante précédente.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue en coupe selon la ligne I-I de la Fig. 2, d'un kit pour une machine de moulage par injection selon un premier mode de réalisation de l'invention en position ouverte,
la Fig. 2 est une vue de face d'une plaque du kit de la Fig. 1,
la Fig. 3 est une vue similaire à celle de la Fig. 1 en position fermée,
la Fig. 4 est une vue similaire à celle de la Fig. 1 lors de l'éjection des pièces moulées,
la Fig. 5 est une vue de face d'une plaque du kit de la Fig. 1 lors de la rotation des barillets,
la Fig. 6 représente une vue de côté d'un kit pour une machine de moulage par injection selon un deuxième mode de réalisation de l'invention en position ouverte,
les Figs. 7, 8 et 9 sont des vues similaires à la Fig. 6 pour des étapes de moulage différentes,
la Fig. 10a est une vue de face d'une plaque du kit de la Fig. 6 lors de la rotation des barillets,
la Fig. 10b est une vue de face d'une plaque du kit de la Fig. 6 lors de la rotation des barillets,
la Fig. 11 représente une vue de côté d'un kit pour une machine de moulage par injection selon un troisième mode de réalisation de l'invention en position ouverte,
les Figs. 12, 13 et 14 sont des vues similaires à la Fig. 11 pour des étapes de moulage différentes,
la Fig. 15a est une vue de face d'une plaque du kit de la Fig. 11 lors de la rotation des barillets, et
la Fig. 15b est une vue de face d'une plaque du kit de la Fig. 11 lors de la rotation des barillets.

Dans l'ensemble des Figs., les kits sont montés sur des machines de moulage par injection qui sont reliées à une presse à injection non représentée qui alimente les volumes délimités par les empreintes et les contre-empreintes en matériaux de moulage.

Dans la description qui suit, le terme 'empreinte' représente une forme de moulage disposée sur un barillet et le terme 'contre-empreinte' représente la forme de moulage associée complémentaire de ladite empreinte. Ainsi, une forme de moulage disposée sur un barillet peut être dénommée 'empreinte' et 'contre-empreinte'. Une forme de moulage disposée directement sur une plaque support est dénommée 'contre-empreinte'.

La machine de moulage comporte un premier plateau et un deuxième plateau qui sont prévus pour être mobiles l'un par rapport à l'autre en coulissement selon une direction de translation 180 de manière à prendre successivement une position ouverte et une position fermée.

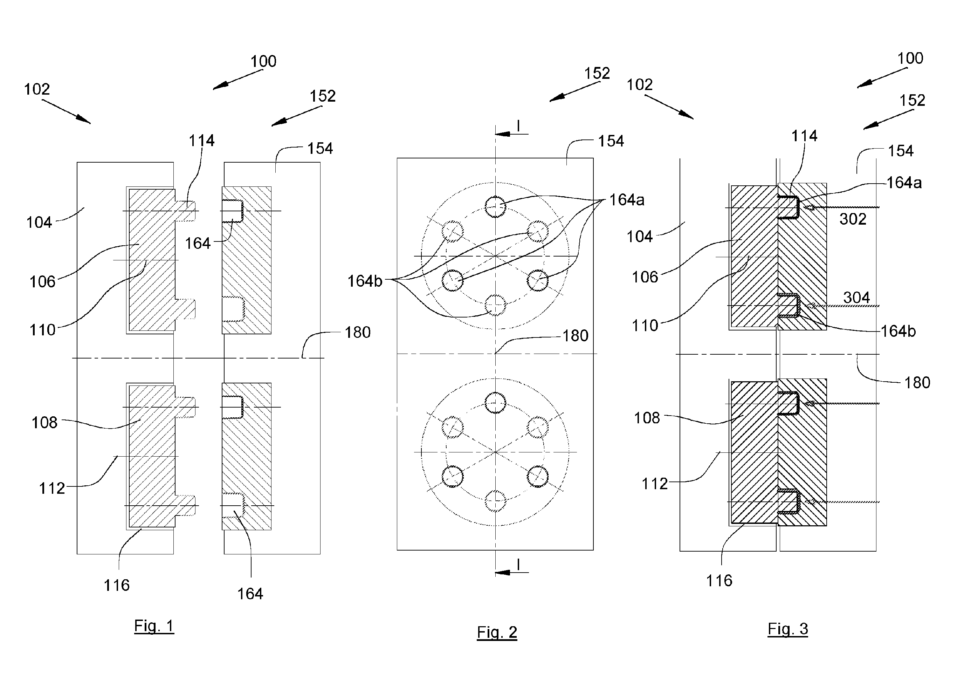

La Fig. 1 montre un kit 100 pour une machine de moulage par injection destinée à réaliser une pièce par moulage ainsi qu'à réaliser un surmoulage sur celle-ci avant son éjection. Le kit 100 comporte un premier ensemble 102 et un deuxième ensemble 152.

Le premier ensemble 102 comporte une première plaque support 104, le deuxième ensemble 152 comporte une deuxième plaque support 154.

La première plaque support 104 est destinée à être fixée sur le premier plateau, et la deuxième plaque support 154 est destinée à être fixée sur le deuxième plateau, de manière à ce que en position ouverte les deux plaques support 104 et 154 sont distantes l'une de l'autre et en position fermée les deux plaques support 104 et 154 sont accolées l'une à l'autre.

Pour au moins une desdites plaques support 104, 154, ici la première plaque support 104, au moins un barillet 106, 108 est mis en place (ici deux barillets sont mis en place).

Chaque barillet 106, 108 est, d'une part, monté mobile en rotation sur ladite plaque support 104 autour d'un axe 110, 112 parallèle à la direction de translation 180, et, d'autre part, porte au moins deux empreintes 114. La direction de translation 180 est perpendiculaire au plan de chaque plaque support 104, 154.

Pour chacune des empreintes 114, la deuxième plaque support 154 présente une contre-empreinte 164.

Des moyens d'entraînement destinés à déplacer en rotation chaque barillet 106, 108 sont prévus. Les moyens d'entraînement permettent le positionnement successif de chaque empreinte 114 en vis-à-vis d'au moins deux contre-empreintes 164 différentes. Ces moyens d'entraînement peuvent être hydrauliques, pneumatiques, électriques.

Comme cela est expliqué ci-après, une machine de moulage comportant un tel kit 100 permet de mouler une pièce et de surmouler la pièce ainsi moulée.

La première plaque support 104 présente sur l'une de ses faces, pour chaque barillet 106, 108, un logement 116 destiné à loger ledit barillet 106, 108.

Chaque barillet 106, 108 porte une pluralité d'empreintes 114, chacune conformée de manière à réaliser une partie d'une pièce à mouler, et, en particulier, la partie ne recevant pas de surmoulage.

La deuxième plaque support 154 comporte pour chaque empreinte 114, une contre-empreinte 164. Chaque contre-empreinte 164 est ici conformée de manière à réaliser une autre partie de la pièce à mouler, et, en particulier, la partie recevant le surmoulage.

Le déplacement des plateaux et donc des plaques support 104 et 154 l'un par rapport à l'autre, peut être réalisé par exemple par la mise en place de vérins entre les deux plateaux.

Le fait que les plaques support 104 et 154 ne supportent qu'un déplacement en translation et non un déplacement en rotation permet d'assurer une bonne mise en place des empreintes 114 et des contre-empreintes 164.

La Fig. 2 montre le deuxième ensemble 152 vu de face.

Pour chaque barillet 106, 108, six contre-empreintes 164a et 164b ont été représentées et elles sont réparties angulairement de manière régulière tous les 60°. De la même manière, six empreintes 114 sont prévues sur chaque barillet 106, 108.

Les contre-empreintes 164a sont les contre-empreintes dans lesquelles la pièce à mouler est injectée et les contre-empreintes 164b sont les contre-empreintes dans lesquelles le surmoulage de la pièce ainsi moulée est réalisé.

La Fig. 3 montre le kit 100 en position fermée.

Chaque couple constitué d'une empreinte 114 et d'une contre-empreinte 164a est alimenté par une presse à injection en matériau destiné à réaliser la pièce à mouler. La flèche 302 représente cette injection.

Chaque couple constitué d'une empreinte 114 et d'une contre-empreinte 164b est alimenté par une presse à injection en matériau destiné à réaliser le surmoulage de la pièce à mouler. La flèche 304 représente cette injection.

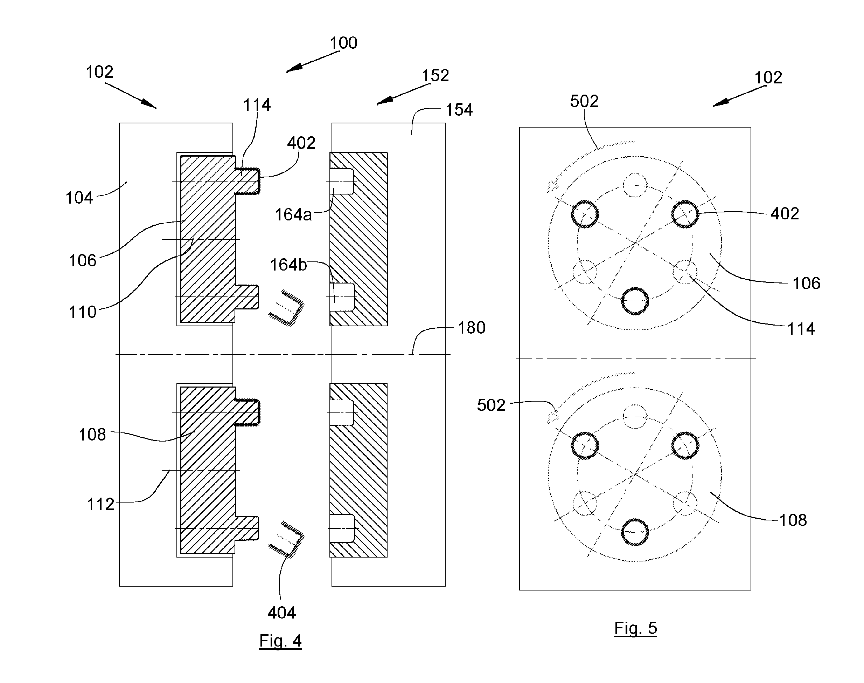

La Fig. 4 montre le kit 100 en position ouverte. Cette position suit la position représentée sur la Fig. 3 où une pièce 402 a été moulée par un couple empreinte 114 / contre-empreinte 164a et où une pièce 404 précédemment moulée a été surmoulée par un couple empreinte 114 / contre-empreinte 164b.

En position ouverte, la pièce 404 est éjectée tandis que la pièce 402 reste en place sur le barillet 106, 108 correspondant, ici elle reste sur l'empreinte 114.

La Fig. 5 montre le deuxième ensemble 102 vu de face.

En position ouverte, chaque barillet 106, 108 est déplacé en rotation par les moyens d'entraînement sur un angle de 60°. Les flèches 502 représentent ces rotations. Selon le nombre de contre-empreintes 164, l'angle de rotation peut varier. L'angle de rotation est égal à 360° divisé par le nombre de contre-empreintes 164.

Après cette rotation 502, le kit 100 passe en position fermée (Fig. 3) mais les empreintes 114 se sont déplacées et chacune se trouve maintenant en vis-à-vis d'une autre contre-empreinte 164a, 164b. C'est-à-dire que les empreintes 114 qui, avant la rotation 502, se trouvaient en vis-à-vis d'une contre-empreinte 164a, se retrouvent, après la rotation 502, en vis-à-vis d'une contre-empreinte 164b, et inversement.

Les empreintes 114 vides se retrouvent en vis-à-vis des contre-empreintes 164a et les empreintes 114 portant les pièces 402 se retrouvent en vis-à-vis des contre-empreintes 164b.

Ainsi, à chaque déplacement en rotation de chaque barillet 106, 108, au moins l'un des couples empreinte 114 / contre-empreinte 164a constitue un couple de moulage de la pièce à mouler, et au moins l'un des autres couples empreinte 114 / contre-empreinte 164b constitue un couple de surmoulage de la pièce ainsi moulée.

Dans le cas d'un surmoulage simple, il y a un nombre pair de contre-empreintes 164, qui sont réparties angulairement de manière uniforme et intercalée en deux groupes de contre-empreintes 164a et 164b. Les contre-empreintes 164a du premier groupe servant au moulage et les contre-empreintes 164b du deuxième groupe servant au surmoulage. Le nombre de couples de moulage est égal au nombre de couples de surmoulage.

Dans le cas d'un surmoulage multiple, il y a au moins une contre-empreinte 164a pour réaliser le moulage de la pièce 402 et pour chaque surmoulage, il y a au moins une contre-empreinte 164b pour réaliser ledit surmoulage. Pour chaque surmoulage, le nombre de contre-empreintes 164b est égal au nombre de contre-empreintes 164a.

Bien sûr, il est possible de répartir les groupes différemment. Par exemple, les contre-empreintes 164a sont regroupées d'un même côté d'un axe de symétrie et les contre-empreintes 164b sont regroupées de l'autre côté de l'axe de symétrie. L'angle de rotation des barillets 106 et 108 est alors différent, par exemple 180°.

Le procédé de moulage et de surmoulage de la pièce 404 mis en oeuvre avec la machine de moulage comportant le kit 100 comporte, à partir de la position fermée des deux plaques support 104 et 154:
- une étape de surmoulage de la pièce 404 précédemment moulée par un couple de surmoulage constitué d'une empreinte 114 et d'une contre-empreinte 164b,
- une étape de moulage de la pièce 402 par un couple de moulage constitué d'une empreinte 114 et d'une contre-empreinte 164a,
- une étape de passage en position ouverte des deux plaques support 104 et 154,
- une étape d'éjection de la pièce 402 ainsi surmoulée,
- une étape de rotation de chaque barillet 106, 108 de manière à amener, d'une part, une empreinte 114 d'une position en vis-à-vis d'une contre-empreinte 164a à une position en vis-à-vis d'une contre-empreinte 164b et, d'autre part, une empreinte 114 d'une position en vis-à-vis d'une contre-empreinte 164b à une position en vis-à-vis d'une contre-empreinte 164a,
- une étape de passage en position fermée des deux plaques support 104 et 154, et
- une étape de bouclage sur l'étape de surmoulage.

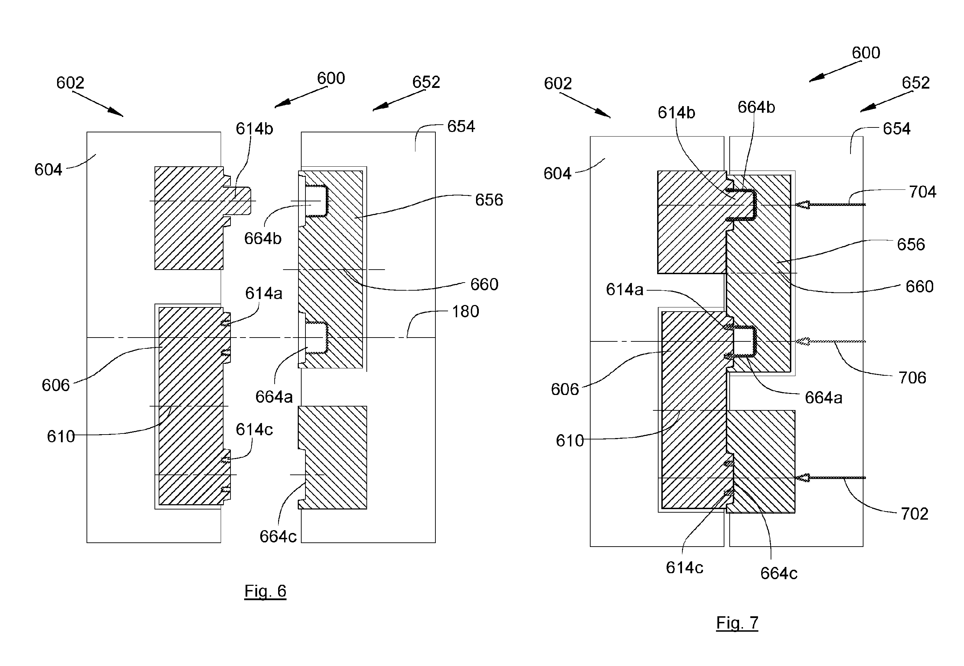

La Fig. 6 montre un kit 600 pour une machine de moulage par injection selon un autre mode de réalisation de l'invention. La machine de moulage par injection permet de mouler deux éléments et de les assembler afin de réaliser la pièce à mouler finale.

Le kit 600 comporte un premier ensemble 602 et un deuxième ensemble 652.

Le premier ensemble 602 comporte une première plaque support 604 le deuxième ensemble 652 comporte une deuxième plaque support 654.

La première plaque support 604 est destinée à être fixée sur le premier plateau, et la deuxième plaque support 654 est destinée à être fixée sur le deuxième plateau, de manière à ce que en position ouverte les deux plaques support 604 et 654 sont distantes l'une de l'autre et en position fermée les deux plaques support 604 et 654 sont accolées l'une à l'autre.

Pour la première plaque 604, un barillet 606 d'un premier type est mis en place et pour la deuxième plaque 654, un barillet 656 d'un deuxième type est mis en place.

Chaque barillet 606, 656, est, d'une part, monté mobile en rotation sur la plaque support 604, 654 considérée autour d'un axe 610, 660 parallèle à la direction de translation 180, et, d'autre part, porte au moins deux empreintes respectivement référencées 614a et 614c, 664a-b. Pour chacune des empreintes 614a et 614c, une contre-empreinte 664a, 664c est disposée sur la deuxième plaque support 654, soit sur le barillet 656 du deuxième type, soit directement sur la deuxième plaque support 654. Pour chacune des empreintes 664a et 664b, une contre-empreinte 614a, 614b est disposée sur la première plaque support 604, soit sur le barillet 606 du premier type, soit directement sur la première plaque support 604. La direction de translation 180 est perpendiculaire au plan de chaque plaque support 604, 654.

Dans le mode de réalisation des Figs. 6 à 10b, le barillet 606 du premier type porte deux empreintes 614a et 614c, et le barillet 656 du deuxième type porte deux empreintes 664a-b.

Pour assurer l'assemblage de deux éléments préalablement moulés, et comme cela est explicité ci-après, à chaque déplacement en rotation de chaque barillet 606, 656, l'une des empreintes 614a du barillet 606 du premier type est en vis-à-vis de l'une des contre-empreintes 664a du barillet 656 du deuxième type. Cette empreinte 614a du barillet 606 du premier type et cette contre-empreinte 664a du barillet 656 du deuxième type constituent un couple d'assemblage des deux éléments moulés.

A chaque déplacement en rotation de chaque barillet 606, 656, l'autre empreinte 614c du barillet 606 du premier type et la contre-empreinte 664c associée de la deuxième plaque support 654 constituent un couple de moulage d'un premier élément de la pièce à mouler, et l'autre empreinte 664b du barillet 656 du deuxième type et la contre-empreinte 614b associée de la première plaque support 604 constituent un couple de moulage d'un deuxième élément de la pièce à mouler.

La contre-empreinte 614b et la contre-empreinte 664c sont fixes sur les plaques support 604 et 654.

La Fig. 7 montre le kit 600 en position fermée.

Chaque couple constitué de la contre-empreinte 614b et de l'empreinte 664b associée ou de l'empreinte 614c et de la contre-empreinte 664c associée, c'est-à-dire dont l'une des formes de moulage 614b, 664c n'est pas sur un barillet 606, 656 constitue un couple de moulage qui est alimenté par une presse à injection en matériau destiné à réaliser les éléments à mouler. La flèche 702 représente cette injection destinée à mouler le premier élément et la flèche 704 représente cette injection destinée à mouler le deuxième élément.

La flèche 706 représente une force d'assemblage qui est générée pour le couple d'assemblage (614a, 664a) afin de réaliser l'assemblage du premier élément et du deuxième élément préalablement moulés afin de réaliser la pièce définitive.

Cette force d'assemblage peut être générée par exemple par un plot entraîné en mouvement de manière hydraulique, pneumatique ou électrique, ou par un jet d'air sous pression qui vient pousser l'un des deux éléments dans l'autre.

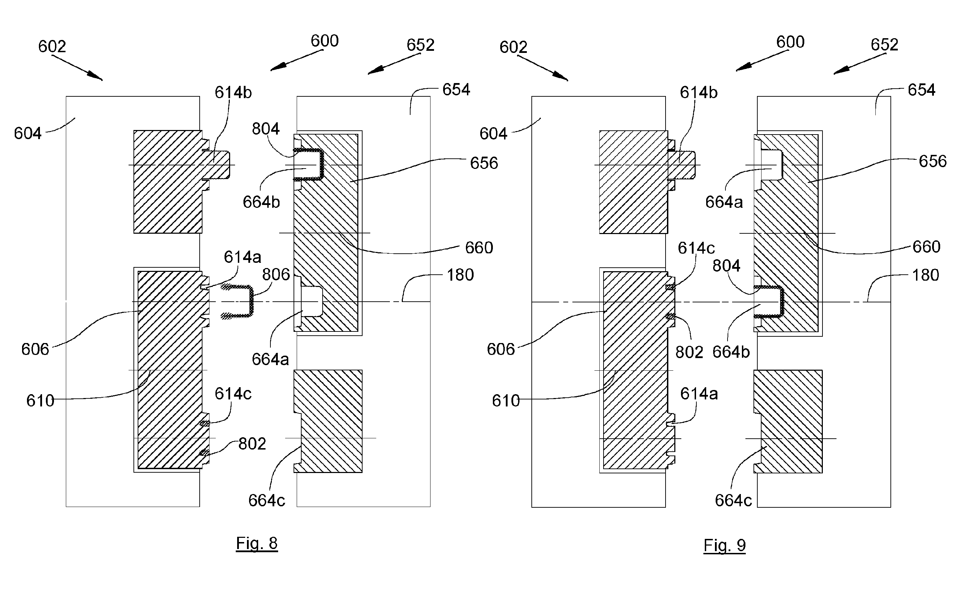

La Fig. 8 montre le kit 600 en position ouverte. Cette position suit la position représentée sur la Fig. 7 où un premier élément 802 a été moulé par le couple (614c, 664c) de moulage du premier élément, et où un deuxième élément 804 a été moulé par le couple (614b, 664b) de moulage du deuxième élément.

En position ouverte, la pièce 806 assemblée est éjectée tandis que le premier élément 802 et le deuxième élément 804 restent fixés sur le barillet 606, 656 correspondant.

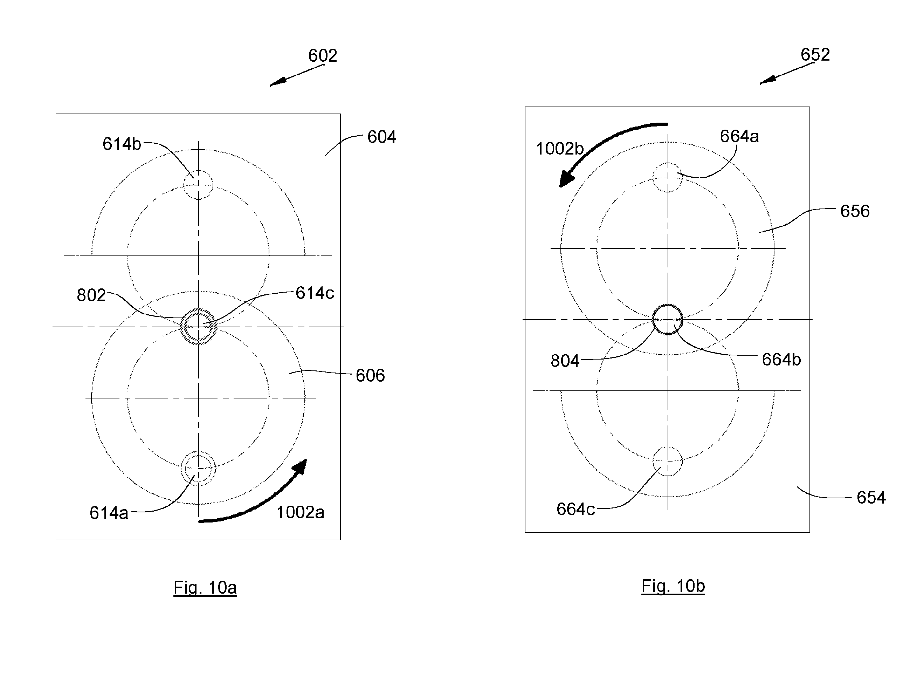

La Fig. 10a montre le premier ensemble 602 vu de face, et la Fig. 10b montre le deuxième ensemble 652 vu de face.

En position ouverte, chaque barillet 606, 656 est déplacé en rotation par des moyens d'entraînement sur un angle de 180°. Les flèches 1002a et 1002b représentent ces rotations.

Après ces rotations 1002a et 1002b, le kit 600 passe en position fermée (Fig. 7) mais les empreintes 614a et 614c, et 664a-b se sont déplacées. Chaque empreinte 614a, 614c se trouve maintenant en vis-à-vis d'une autre contre-empreinte respectivement référencée 664c, 664b, et chaque empreinte 664a-b se trouve maintenant en vis-à-vis d'une autre contre-empreinte respectivement référencée 614b, 614c.

La Fig. 9 montre le kit 600 à la fin des rotations des barillets 606 et 656 et avant le retour en position fermée.

L'empreinte vide 614a et la contre-empreinte vide 614b se retrouvent en vis-à-vis respectivement d'une contre-empreinte vide référencée 664c et d'une empreinte vide référencée 664a. L'empreinte 614c portant le premier élément 802 se retrouve en vis-à-vis de la contre-empreinte 664b portant le deuxième élément 804.

Le kit 600 peut alors passer en position fermée (Fig. 7) où deux nouveaux éléments 802 et 804 sont moulés et où une nouvelle pièce assemblée 806 est réalisée.

Le procédé de moulage et d'assemblage de la pièce 806 à partir du premier élément 802 et du deuxième élément 804 mis en oeuvre avec la machine de moulage comportant le kit 600 comporte, à partir de la position fermée des deux plaques support 604 et 654:
- une étape d'assemblage d'un premier élément 802 précédemment moulé et d'un deuxième élément 804 précédemment moulé par un couple d'assemblage constitué d'une empreinte 614a et d'une contre-empreinte 664a,
- une étape de moulage du premier élément 802 par un couple de moulage constitué d'une empreinte 614c et d'une contre-empreinte 664c,
- une étape de moulage du deuxième élément 804 par un couple de moulage constitué d'une empreinte 664b et d'une contre-empreinte 614b,
- une étape de passage en position ouverte des deux plaques support 104 et 154,
- une étape d'éjection de la pièce 806 ainsi assemblée,
- une étape de rotation de chaque barillet 606, 656, de manière à amener:
   - l'empreinte 614c portant le premier élément 802 d'une position en vis-à-vis de la contre-empreinte 664c à une position en vis-à-vis de la contre-empreinte 664b portant le deuxième élément 804,
   - l'empreinte 664b portant le deuxième élément 804 d'une position en vis-à-vis de la contre-empreinte 614b à une position en vis-à-vis de la contre-empreinte 614c portant le premier élément 802,
   - l'empreinte 614a qui portait le premier élément 802 ainsi assemblé d'une position en vis-à-vis de la contre-empreinte 664a qui portait le deuxième élément 804 ainsi assemblé à une position en vis-à-vis de la contre-empreinte 664c, et
   - l'empreinte 664a qui portait le deuxième élément 804 ainsi assemblé d'une position en vis-à-vis de la contre-empreinte 614a qui portait le premier élément 802 ainsi assemblé à une position en vis-à-vis de la contre-empreinte 614b,
- une étape de passage en position fermée des deux plaques support 604 et 654, et
- une étape de bouclage sur l'étape d'assemblage.

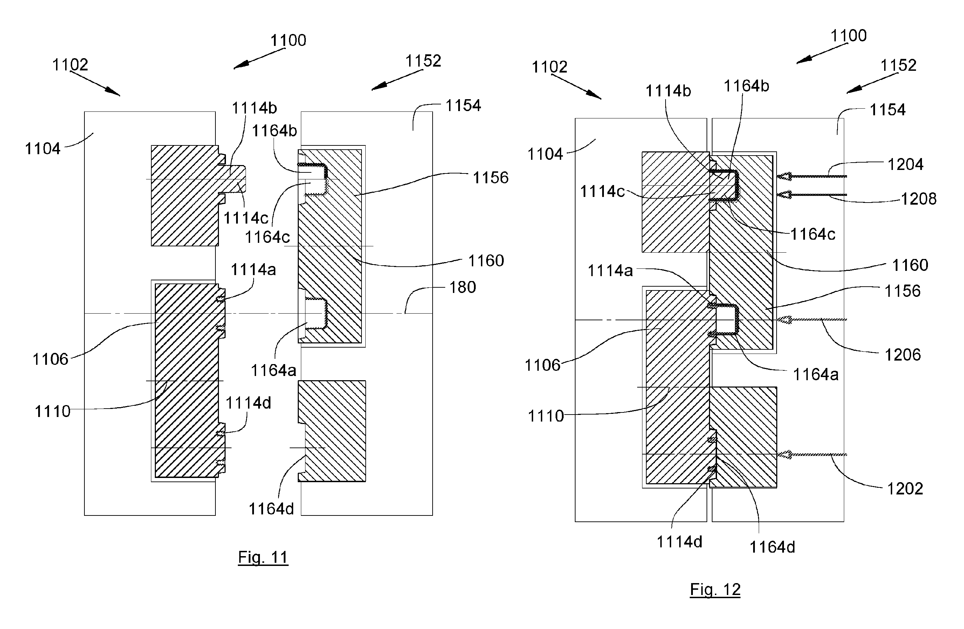

La Fig. 11 montre un kit 1100 pour une machine de moulage par injection selon un autre mode de réalisation de l'invention. La machine de moulage par injection permet de mouler deux éléments, de surmouler au moins l'un des deux et de les assembler afin de réaliser la pièce à mouler.

Le kit 1100 comporte un premier ensemble 1102 et un deuxième ensemble 1152.

Le premier ensemble 1102 comporte une première plaque support 1104, le deuxième ensemble 1152 comporte une deuxième plaque support 1154.

La première plaque support 1104 est destinée à être fixée sur le premier plateau, et la deuxième plaque support 1154 est destinée à être fixée sur le deuxième plateau, de manière à ce que en position ouverte les deux plaques support 1104 et 1154 sont distantes l'une de l'autre et en position fermée les deux plaques support 104 et 1154 sont accolées l'une à l'autre.

Pour la première plaque 1104, un barillet 1106 d'un premier type est mis en place et pour la deuxième plaque 1154, un barillet 1156 d'un deuxième type est mis en place.

Chaque barillet 1106, 1156, est, d'une part, monté mobile en rotation sur la plaque support 1104, 1154 considérée autour d'un axe 1110, 1160 parallèle à la direction de translation 180, et, d'autre part, porte au moins deux empreintes respectivement référencées 1114a et 1114d, 1164a-c. Pour chacune des empreintes 1114a et 1114d, une contre-empreinte 1164a, 1164d est disposée sur la deuxième plaque support 1154, soit sur le barillet 1156 du deuxième type, soit directement sur la deuxième plaque support 1154. Pour chacune des empreintes 1164a-c, une contre-empreinte 1114a-c est disposée sur la première plaque support 1104, soit sur le barillet 1106 du premier type, soit directement sur la première plaque support 1104. La direction de translation 180 est perpendiculaire au plan de chaque plaque support 1104, 1154.

Dans le mode de réalisation des Figs. 11 à 15b, le barillet 1106 du premier type porte deux empreintes 1114a et 1114d, et le barillet 1156 du deuxième type porte trois empreintes 1164a-c. Les empreintes 1164b et 1164c sont vues selon une coupe décalée.

Pour assurer l'assemblage de deux éléments préalablement moulés, et comme cela est explicité ci-après, à chaque déplacement en rotation de chaque barillet 1106, 1156, l'une des empreintes 1114a du barillet 1106 du premier type est en vis-à-vis de l'une des contre-empreintes 1164a du barillet 1156 du deuxième type. Cette empreinte 1114a du barillet 1106 du premier type et cette contre-empreinte 1164a du barillet 1156 du deuxième type constituent un couple d'assemblage du premier élément moulé et du deuxième élément moulé et surmoulé.

A chaque déplacement en rotation de chaque barillet 1106, 1156, l'autre empreinte 1114d du barillet 1106 du premier type et la contre-empreinte 1164d associée de la deuxième plaque support 1154 constituent un couple de moulage d'un premier élément de la pièce à mouler.

L'une des autres empreintes, ici l'empreinte 1164b, du barillet 1156 du deuxième type et la contre-empreinte 1114b associée de la première plaque support 1104 constituent un couple de moulage d'un deuxième élément de la pièce à mouler.

L'une des autres empreintes, ici l'empreinte 1164c, du barillet 1156 du deuxième type et la contre-empreinte 1114c associée de la première plaque support 1104 constituent un couple de surmoulage du deuxième élément.

Les contre-empreintes 1114b et 1114c, et la contre-empreinte 1164d sont fixes sur les plaques support 1104 et 1154. Les contre-empreintes 1114b et 1114c sont vues selon une coupe décalée.

La Fig. 12 montre le kit 1100 en position fermée.

Chaque couple constitué d'une contre-empreinte 1114b-c et d'une empreinte 1164b-c ou de l'empreinte 1114d et de la contre-empreinte 1164d, c'est-à-dire dont l'une des formes de moulage n'est pas sur un barillet 1106, 1156, constitue un couple de moulage ou un couple de surmoulage qui est alimenté par une presse à injection en matériau destiné à réaliser les éléments à mouler ou le surmoulage. La flèche 1202 représente cette injection destinée à mouler le premier élément et la flèche 1204 représente cette injection destinée à mouler le deuxième élément. La flèche 1208 représente cette injection destinée à réaliser le surmoulage du deuxième élément.

La flèche 1206 représente une force d'assemblage qui est générée pour le couple d'assemblage (1114a, 1164a) afin de réaliser l'assemblage du premier élément et du deuxième élément afin de réaliser la pièce définitive.

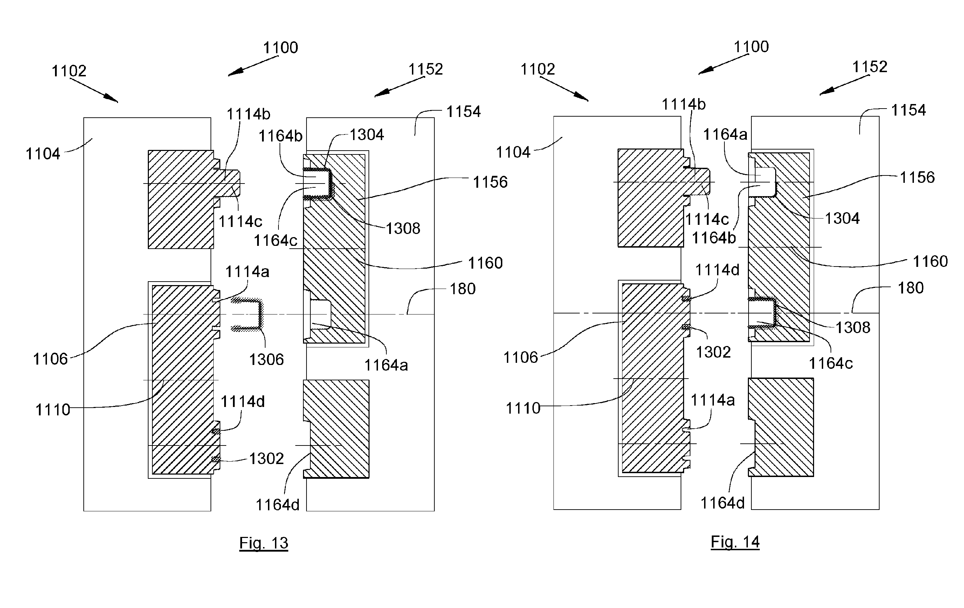

La Fig. 13 montre le kit 1100 en position ouverte. Cette position suit la position représentée sur la Fig. 12 où un premier élément 1302 a été moulé par le couple (1114d, 1164d) de moulage du premier élément, où un deuxième élément 1304 a été moulé par le couple (1114b, 1164b) de moulage du deuxième élément, et où un deuxième élément 1308 précédemment moulé par le couple de moulage du deuxième élément, a été surmoulé par le couple (1114c, 1164c) de surmoulage.

En position ouverte, la pièce 1306 assemblée à partir d'un premier élément 1302 et d'un deuxième élément surmoulé 1308 est éjectée tandis que le premier élément 1302 et le deuxième élément 1304 moulé et le deuxième élément surmoulé 1308 restent fixés sur le barillet 1106, 1156 correspondant.

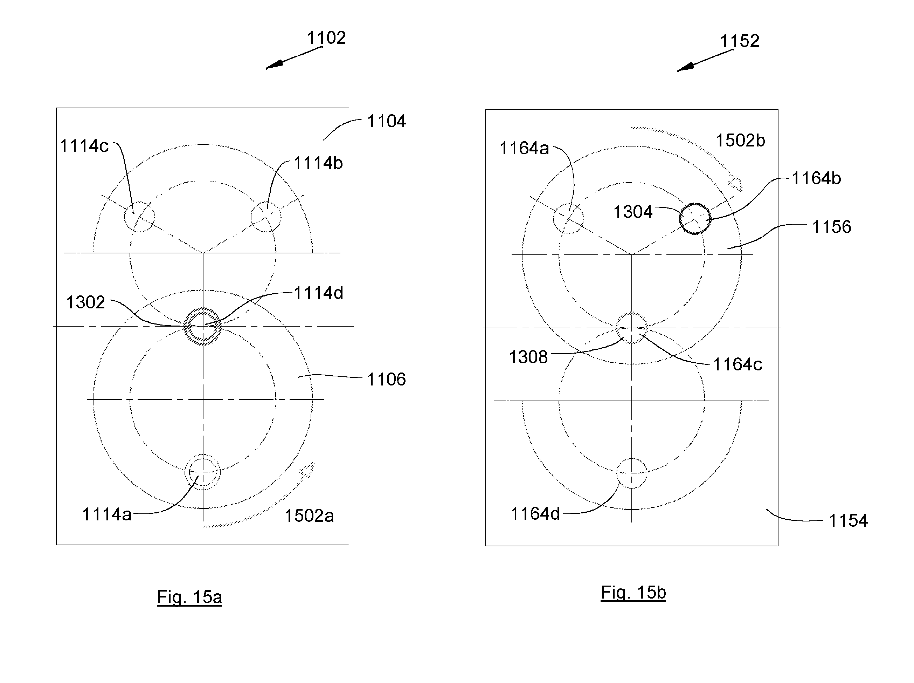

La Fig. 15a montre le premier ensemble 1102 vu de face, et la Fig. 15b montre le deuxième ensemble 1152 vu de face.

En position ouverte, le barillet 1106 du premier type est déplacé en rotation par des moyens d'entraînement sur un angle de 180°, et le barillet 1156 du deuxième type est déplacé en rotation par des moyens d'entraînement sur un angle de 120°. Les flèches 1502a et 1502b représentent ces rotations.

Après ces rotations 1502a et 1502b, le kit 1100 passe en position fermée (Fig. 12) mais les empreintes 1114a et 1114d, et 1164a-c se sont déplacées. Chaque empreinte 1114a, 1114d se trouve maintenant en vis-à-vis d'une autre contre-empreinte respectivement référencée 1164d, 1164c, et chaque empreinte 1164a-c se trouve maintenant en vis-à-vis d'une autre contre-empreinte respectivement référencée 1114b, 1114c, 1114d.

La Fig. 14 montre le kit 1100 à la fin des rotations des barillets 1106 et 1156 et avant le retour en position fermée.

L'empreinte vide 1114a et la contre-empreinte vide 1114b se retrouvent en vis-à-vis respectivement d'une contre-empreinte vide référencée 1164d et d'une empreinte vide référencée 1164a. L'empreinte 1114d portant le premier élément 1302 se retrouve en vis-à-vis de la contre-empreinte 1164c portant le deuxième élément 1308 surmoulé. L'empreinte 1164b portant le deuxième élément 1304 moulé se retrouve en vis-à-vis de la contre-empreinte 1114c.

Bien sûr, si le premier élément 1302 doit être surmoulé avant d'être assemblé, il est possible d'introduire une autre empreinte sur le barillet du premier type et une contre-empreinte associée sur la deuxième plaque support. La rotation du barillet du premier type est alors de 120° à chaque rotation.

Le kit 1100 peut alors passer en position fermée (Fig. 12) où deux nouveaux éléments 1302 et 1304 sont moulés, où un nouveau deuxième élément 1308 est surmoulé et où une nouvelle pièce assemblée 1306 est réalisée.

Le procédé de moulage, de surmoulage et d'assemblage de la pièce 1306 à partir du premier élément 1302 et du deuxième élément 1304 surmoulé mis en oeuvre avec la machine de moulage comportant le kit 1100 comporte, à partir de la position fermée des deux plaques support 1104 et 1154:
- une étape d'assemblage d'un premier élément 1302 précédemment moulé et d'un deuxième élément 1304 précédemment moulé et surmoulé par un couple d'assemblage constitué d'une empreinte 1114a et d'une contre-empreinte 1164a,
- une étape de surmoulage d'un deuxième élément 1308 précédemment moulé par un couple de surmoulage constitué d'une empreinte 1114c et d'une contre-empreinte 1164c,
- une étape de moulage du premier élément 1302 par un couple de moulage constitué d'une empreinte 1114d et d'une contre-empreinte 1164d,
- une étape de moulage du deuxième élément 1304 par un couple de moulage constitué d'une empreinte 1164b et d'une contre-empreinte 1114b,
- une étape de passage en position ouverte des deux plaques support 1104 et 1154,
- une étape d'éjection de la pièce 1306 ainsi assemblée,
- une étape de rotation de chaque barillet 1106, 1156, de manière à amener:
   - l'empreinte 1164b portant le deuxième élément 1304 précédemment moulé d'une position en vis-à-vis de la contre-empreinte 1114b à une position en vis-à-vis de la contre-empreinte 1114c,
   - l'empreinte 1114d portant le premier élément 1302 d'une position en vis-à-vis de la contre-empreinte 1164d à une position en vis-à-vis de la contre-empreinte 1164c portant le deuxième élément 1308 ainsi surmoulé,
   - l'empreinte 1164c portant le deuxième élément 1308 ainsi surmoulé d'une position en vis-à-vis de la contre-empreinte 1114c à une position en vis-à-vis de la contre-empreinte 1114d portant le premier élément 1302,
   - l'empreinte 1114a qui portait le premier élément 1302 ainsi assemblé d'une position en vis-à-vis de la contre-empreinte 1164a qui portait le deuxième élément 1308 ainsi assemblé à une position en vis-à-vis de la contre-empreinte 1164d,
   - l'empreinte 1164a qui portait le deuxième élément 1308 ainsi assemblé d'une position en vis-à-vis de la contre-empreinte 1114a qui portait le premier élément 1302 ainsi assemblé à une position en vis-à-vis de la contre-empreinte 1114b,
   - une étape de passage en position fermée des deux plaques support 1104 et 1154, et
   - une étape de bouclage sur l'étape d'assemblage.

Bien entendu, la présente invention n'est pas limitée aux exemples et modes de réalisation décrits et représentés, mais elle est susceptible de nombreuses variantes accessibles à l'homme de l'art.

Par exemple, les sens de rotation des différents barillets peuvent être différents.

Dans chacun des modes de réalisation décrits ci-dessus, le nombre d'empreintes et le nombre de contre-empreintes, ainsi que leurs répartitions angulaires peuvent varier.

## Revendications

1. Kit (1100) pour une machine de moulage par injection de pièces moulées, la machine de moulage comportant un premier plateau et un deuxième plateau, le kit comportant:
- une première plaque support (1104) destinée à être fixée sur ledit premier plateau,
- une deuxième plaque support (1154) destinée à être fixée sur ledit deuxième plateau, les deux plateaux étant prévus pour être mobiles l'un par rapport à l'autre en coulissement selon une direction de translation (180) de manière à prendre successivement une position ouverte dans laquelle les deux plaques support (1104, 1154) sont distantes l'une de l'autre et une position fermée dans laquelle les deux plaques support (1104, 1154) sont accolées l'une à l'autre,
- pour la première plaque support (1104), au moins un barillet (1106) d'un premier type, monté mobile en rotation sur ladite première plaque support (1104) autour d'un axe (1110) perpendiculaire au plan de ladite première plaque support (1104), et portant au moins deux empreintes (1114a, 1114d),
- pour la deuxième plaque support (1154), au moins un barillet (1156) d'un deuxième type, monté mobile en rotation sur ladite deuxième plaque support (1154) autour d'un axe (1160) perpendiculaire au plan de ladite deuxième plaque support (1154), et portant au moins trois empreintes (1164a-c),
- pour chacune desdites empreintes (1114a, 1114d, 1164a-c), une contre-empreinte (1164a, 1164d, 1114a-c) disposée sur l'autre plaque support (1104, 1154),
- des moyens d'entraînement destinés à déplacer en rotation chaque barillet (1106, 1156) pour permettre le positionnement successif de chaque empreinte (1114a, 1114d, 1164a-c) en vis-à-vis d'au moins deux contre-empreintes (1164a, 1164d, 1114a-c) différentes et de manière à ce que, à chaque déplacement en rotation de chaque barillet (1106, 1156), l'une des empreintes (1114a) dudit barillet (1106) du premier type soit en vis-à-vis de l'une des contre-empreintes (1164a) dudit barillet (1156) du deuxième type et de manière à ce que, à chaque déplacement en rotation de chaque barillet (1106, 1156), l'autre empreinte (1114d) dudit barillet (1106) du premier type et la contre-empreinte (1164d) associée de ladite deuxième plaque support (1154) constituent un couple de moulage d'un premier élément (1302) de la pièce à mouler, l'une des autres empreintes (1164b) dudit barillet (1156) du deuxième type et la contre-empreinte (1114b) associée de ladite première plaque support (1104) constituent un couple de moulage d'un deuxième élément (1304) de la pièce à mouler, l'une des autres empreintes (1164c) dudit barillet (1156) du deuxième type et la contre-empreinte (1114c) associée de ladite première plaque support (1104) constituent un couple de surmoulage dudit deuxième élément (1304), et ledit couple empreinte (1114a) dudit barillet (1106) du premier type et contre-empreinte (1164a) dudit barillet (1156) du deuxième type constituent un couple d'assemblage dudit premier élément (1302) ainsi moulé et dudit deuxième élément (1308) ainsi moulé et surmoulé.

2. Machine de moulage par injection de pièces moulées comportant:
- un premier plateau,
- un deuxième plateau, les deux plateaux étant prévus pour être mobiles l'un par rapport à l'autre en coulissement selon une direction de translation (180), et
- un kit (1100) selon la revendication 1.

## Patentansprüche

1. Kit (1100) für eine Maschine zum Spritzgießen von Formteilen, die Gießmaschine umfassend eine erste Aufspannplatte und eine zweite Aufspannplatte, das Kit umfassend :
- eine erste Trägerplatte (1104), die dazu bestimmt ist, auf der genannten ersten Aufspannplatte befestigt zu werden,
- eine zweite Trägerplatte (1154), die dazu bestimmt ist, auf der genannten zweiten Aufspannplatte befestigt zu werden, wobei die beiden Aufspannplatten so vorgesehen sind, dass sie in eine Translationsrichtung (180) zueinander gleitbeweglich sind, derart, dass sie nacheinander eine offene Stellung, in der die beiden Trägerplatten (1104, 1154) voneinander beabstandet sind und eine geschlossene Stellung, in der die beiden Trägerplatten (1104, 1154) aneinander anliegen, einnehmen,
- für die erste Trägerplatte (1104) wenigstens einen Drehteller (1106) einer ersten Art, der um eine, zur Ebene der ersten Trägerplatte (1104) senkrechte Achse (1110) drehbeweglich auf der ersten Trägerplatte (1104) montiert ist und wenigstens zwei Kavitäten (1114a, 1114d) trägt,
- für die zweite Trägerplatte (1154) wenigstens einen Drehteller (1156) einer zweiten Art, der um eine, zur Ebene der zweiten Trägerplatte (1154) senkrechte Achse (1160) drehbeweglich auf der zweiten Trägerplatte (1154) montiert ist und wenigstens drei Kavitäten (1164a-c) trägt,
- für jede der genannten Kavitäten (1114a, 1114d, 1164a-c), eine, auf der anderen Trägerplatte (1104, 1154) angeordnete Gegenkavität (1164a, 1164d, 1114a-c),
- Antriebsmittel, die dazu bestimmt sind, jeden Drehteller (1106, 1156) drehend zu bewegen, um die aufeinanderfolgende Positionierung jeder Kavität (1114a, 1114d, 1164a-c) gegenüber wenigstens zwei unterschiedlichen Gegenkavitäten derart zu ermöglichen, dass bei jeder Drehbewegung jedes Drehtellers (1106, 1156) eine der Kavitäten (1114a) des genannten Drehtellers (1106) der ersten Art, gegenüber einer der Gegenkavitäten (1164a) des genannten Drehtellers (1156) der zweiten Art zu liegen kommt, und derart, dass bei jeder Drehbewegung jedes Drehtellers (1106, 1156), die andere Kavität (1114d) des genannten Drehtellers (1106) der ersten Art und die zugeordnete Gegenkavität (1164d) der zweiten Trägerplatte (1154) ein Gießpaar eines ersten Elements (1302) des zu gießenden Formteils bilden, eine der weiteren Kavitäten (1164b) des genannten Drehtellers (1156) der zweiten Art und die zugeordnete Gegenkavität (1114b) der genannten ersten Trägerplatte (1104) ein Gießpaar eines zweiten Elements (1304) des zu gießenden Formteils bilden, eine der weiteren Kavitäten (1164c) des genannten Drehtellers (1156) der zweiten Art und die zugeordnete Gegenkavität (1114c) der genannten ersten Trägerplatte (1104) ein Überspritzpaar des genannten zweiten Elements (1304) bilden und das genannte, aus der Kavität (1114a) des genannten Drehtellers (1106) der ersten Art und der Gegenkavität (1164a) des genannten Drehtellers (1156) der zweiten Art bestehende Paar ein Zusammensetzpaar des genannten derart gegossenen ersten Elements (1302) und des genannten derart gegossenen und überspritzten zweiten Elements (1308) bilden.

2. Maschine zum Spritzgießen von Formteilen umfassend :
- eine erste Aufspannplatte,
- eine zweite Aufspannplatte, wobei die beiden Aufspannplatten so vorgesehen sind, dass sie in eine Translationsrichtung (180) zueinander gleitbeweglich sind, und
- ein Kit (1100) gemäß Patentanspruch 1.

## Claims

1. Kit (1100) for a machine for the injection moulding of moulded parts, the moulding machine comprising a first platen and a second platen, the kit comprising:
- a first support plate (1104) intended to be fixed on said first platen,
- a second support plate (1154) intended to be fixed on said second platen, the two platens being designed to be able to move with respect to each other by sliding according to a translation direction (180) so as to adopt successively an open position in which the two support plates (1104, 1154) are distant from each other and a closed position in which the two support plates (1104, 1154) are up against each other,
- for the first support plate (1104), at least one barrel (1106) of a first type, rotatably mounted on said first support plate (1104) about an axis (1110) perpendicular to the plane of said first support plate (1104), and carrying at least two cavities (1114a, 1114d),
- for the second support plate (1154), at least one barrel (1156) of a second type, rotatably mounted on said second support plate (1154) about an axis (1160) perpendicular to the plane of said second support plate (1154), and carrying at least three cavities (1164a-c),
- for each of said cavities (1114a, 1114d, 1164a-c), a counter-cavity (1164a, 1164d, 1114a-c) disposed on the other support plate (1104, 1154),
- driving means intended to rotate each barrel (1106, 1156) to allow the successive positioning of each cavity (1114a, 1114d, 1164a-c), opposite at least two different counter-cavities (1164a, 1164d, 1114a-c) and so that, at each rotation movement of each barrel (1106, 1156), one of the cavities (1114a) of said barrel (1106) of the first type is opposite one of the counter-cavities (1164a) of said barrel (1156) of the second type and so that, at each rotation movement of each barrel (1106, 1156), the other cavity (1114d) of said barrel (1106) of the first type and the associated counter-cavity (1164d) of said second support plate (1154) constitute a moulding pair for a first element (1302) of the part to be moulded, one of the other cavities (1164b) of said barrel (1156) of the second type and the associated counter-cavity (1114b) of said first support plate (1104) constitute a moulding pair for a second element (1304) of the part to be moulded, one of the other cavities (1164c) of said barrel (1156) of the second type and the associated counter-cavity (1114c) of said first support plate (1104) constitute an overmoulding pair for said second element (1304), and said pair consisting of the cavity (1114a) of said barrel (1106) of the first type and the counter-cavity (1164a) of said barrel (1156) of the second type constitute an assembly pair for said first element (1302) thus moulded and for said second element (1308) thus moulded and overmoulded.

2. Machine for the injection moulding of moulded parts, comprising:
- a first platen,
- a second platen, the two platens being designed to be able to move with respect to each other by sliding according to a translation direction (180), and
- a kit (1100) according to claim 1.
